# EUROPÄISCHE PATENTANMELDUNG

(11) **EP 0 585 559 A1**
(43) Veröffentlichungstag der Anmeldung: **09.03.1994**
(21) Anmeldenummer: 93110694.2
(22) Anmeldetag: 05.07.1993
(51) Int. Cl.: B60N 3/02

(54) **Haltegriff für Fahrzeuge**

(30) Priorität: 08.07.1992 DE 4222383
(71) Anmelder: Gebr. Happich GmbH, D-42097 Wuppertal (DE)
(72) Erfinder: Kauka, Christof, D-47623 Kevelaer (DE); Schmidt, Wolfgang, D-44879 Bochum (DE)

(57) **Zusammenfassung**

Es wird ein Haltegriff für Fahrzeuge, bestehend aus einem U-förmig ausgebildeten Griffbügel (1), der einen Steg (2) und zwei Schenkel (3) umfaßt und an den freien Schenkelenden (4) daran mittels Lagerachsen (6) angelenkte Lagerböcke (5) trägt, die an einer Fahrzeugkarosserie, im Übergangsbereich zwischen dem Dach und einer Seitenwand befestigbar sind, wobei der Griffbügel (1) aus einer eng an einer Befestigungsfläche anliegenden Nichtgebrauchslage gegen die Kraft eines Rückstellmittels in eine von der Befestigungsfläche abstehenden Gebrauchslage schwenkbar ist, beschrieben, wobei vorgesehen ist, daß das Rückstellmittel aus zumindest einem Magneten (7) besteht.

## Beschreibung

Die Erfindung bezieht sich auf einen Haltegriff für Fahrzeuge, bestehend aus einem U-förmig ausgebildeten Griffbügel, der einen Steg und zwei Schenkel umfaßt und an den freien Schenkelenden daran mittels Lagerachsen angelenkte Lagerböcke trägt, die an einer Fahrzeugkarosserie, im Übergangsbereich zwischen dem Dach und einer Seitenwand befestigbar sind, wobei der Griffbügel aus einer eng an einer Befestigungsfläche anliegenden Nichtgebrauchslage gegen die Kraft eines Rückstellmittels in eine von der Befestigungsfläche abstehenden Gebrauchslage schwenkbar ist.

Ein Haltegriff der gattungsgemäßen Art ist in den Unterlagen der prioritätsälteren deutschen Patentanmeldung P 41 10 822.1 gezeigt und beschrieben. Bei diesem bekannten Haltegriff ist als Rückstellmittel eine Schraubenfeder vorgesehen, die den Griffkörper in Richtung zur Nichtgebrauchslage hin belastet. Die Schraubenfeder ist relativ stark vorgespannt, um den Griffkörper gegen die Befestigungsfläche zu zwingen, was zwecks Vermeidung von Klappergeräuschen notwendig ist, insbesondere dann, wenn der Griffkörper in einer aus hartem Kunststoffmaterial gebildeten Aufnahmeschale angeordnet ist. Eine Schraubenfeder als Rückstellmittel für den Griffbügel bewirkt, daß das Rückstellmoment am größten ist, wenn sich der Griffbügel in Gebrauchslage befindet hingegen am kleinsten ist, wenn sich der Griffbügel in der Nichtgebrauchslage befindet.

Der Erfindung liegt nun die Aufgabe zugrunde, einen Haltegriff der eingangs genannten Art zu schaffen, bei dem sich beim Schwenken des Griffkörpers aus der Nichtgebrauchslage in die Gebrauchslage das Rückstellmoment verringert.

Gelöst wird diese Aufgabe erfindungsgemäß dadurch, daß das Rückstellmittel aus zumindest einem Magneten besteht.

Zurfolge dieser erfindungsgemäßen Maßnahme wird erreicht, daß der Griffkörper in der Nichtgebrauchslage mit einem Rückstellmoment in Richtung zur Befestigungsfläche belastet ist, welches groß genug ist, eine klapperfreie Anlage zu gewährleisten. Bei der Überführung des Griffkörpers aus der Nichtgebrauchslage in die Gebrauchslage nimmt das Rückstellmoment hingegen kontinuierlich ab, wobei aber das Rest- Rückstellmoment noch ausreichend groß genug ist, um eine Überführung des Griffkörpers aus der Gebrauchslage in die Nichtgebrauchslage zu sichern. Im Gegensatz zum Stand der Technik ist beim erfindungsgemäßen Haltegriff die Rückstellkraft am größten, wenn sich der Griffkörper in der Nichtgebrauchslage befindet, womit Klappergeräuschen entgegengewirkt wird und am kleinsten, wenn sich der Griffkörper in der Gebrauchslage befindet, was die Handhabung erleichtert.

Als Magnet kommt in erster Linie ein relativ starker Dauermagnet in Frage, wodurch aber nicht ausgeschlossen sein soll, ein elektromagnetisches Rückstellmittel einzusetzen, daß heißt, es kann auch ein Elektromagnet, der über die Fahrzeugelektrik mit elektrischem Strom versorgt wird, zum Einsatz gelangen.

In Ausgestaltung der Erfindung ist vorgesehen, daß der zumindest eine Magnet aus einem stabförmigen Innenmagneten und einem diesen umgreifenden Außenmagneten besteht, wobei der Innenmagnet eine der Lagerachsen bildet oder mit einer der Lagerachsen drehfest verbunden ist. Dabei kann noch zwecks Bündelung des Magnetfeldes und Stärkung des Magneten vorgesehen sein, daß der Außenmagnet einen ihn umhüllenden Mantel aus magnetischem Eisen aufweist.

Die Erfindung wird nachfolgend anhand eines auf der Zeichnung dargestellten Ausführungsbeispiels näher erläutert. Es zeigen
Fig. 1 einen Haltegriff in Ansicht,
Fig. 2 einen Schnitt II - II nach Fig. 1 und
Fig. 3 einen Schnitt III - III nach Fig. 1.

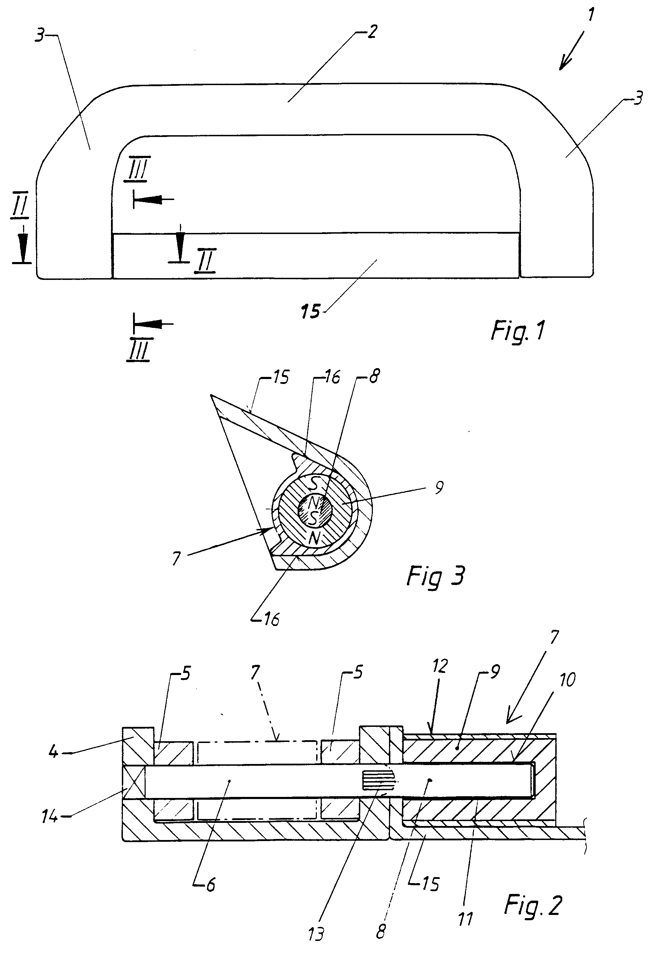

Der neue Haltegriff besteht aus einem U-förmigen Griffbügel 1 mit einem Steg 2 und zwei Schenkel 3. An den freien Schenkelenden 4 sind Lagerböcke 5, von denen Fig. 2 nur den Linksseitigen zeigt, mittels jeweils einer Lagerachse 6 angelenkt. Die Lagerböcke 5 sind in üblicher und daher nicht näher dargestellter Weise an einer Fahrzeugkarosserie zu befestigen.

Der Griffbügel 1 wird durch einen Dauermagneten 7 (Drehmagnet) in der Nichtgebrauchslage gehalten bzw. aus der Gebrauchslage in die Nichtgebrauchslage zurückgeführt. Der Magnet 7 sitzt, wie Fig. 2 zeigt, neben den Schenkelenden 4 oder, wie mit strichpunktierten Linien angedeutet, zwischen den Armen zumindest eines der Lagerböcke 5. Der Magnet 7 besteht aus einem stabförmigen Innenmagneten 8 und einem diesen umgreifenden Außenmagneten 9. Der Außenmagnet 9 weist eine zentrische Bohrung 10 zur Aufnahme des Innenmagneten 8 auf. Zwischen den Wandungen des Innenmagneten 8 und der Bohrung 10 ist ein kleiner Luftspalt 11 vorgesehen. Der Außenmagnet 9 trägt einen ihn umhüllenden Mantel 12 aus magnetischem Eisen.

Der Innenmagnet 8 kann einstückig mit der Lagerachse 6 ausgebildet oder aber auch mit dieser axial verbunden sein wie dies in Fig. 2 mit dem Bezugszeichen 13 angedeutet ist.

Im Ausführungsbeispiel ist die Lagerachse 6 durch eine formschlüssige Verbindung 14 verdrehfest am Griffbügel 1 festgelegt, während der Magnet 7 (Außenmagnet 9, Mantel 12) verdrehfest in einem Lagerbock 5 bzw. in einer die Lagerböcke 5 miteinander verbindenden Profilschiene 15 sitzt.

Aus Fig. 3 ist ersichtlich, daß der Magnet 7 bzw. der Mantel 12 im Querschnitt unrund ausgebildet ist und sich mit Anschlagflächen 16 gegen entsprechende Gegenflächen der Profilschiene 15 abstützt.

Bei der Darstellung nach Fig. 3 befindet sich der Griffbügel 1 in der Nichtgebrauchslage. In dieser Lage stehen sich Nord- und Südpol des Innenmagneten 8 und des Außenmagneten 9 diametral gegenüber. Beim Herausklappen des Griffbügels 1 in die Gebrauchslage entfernen sich Nord- und Südpol voneinander mit der Folge eines sich verringernden Rückstellmoments. Andererseits vergrößert sich das Rückstellmoment bei zunehmender Annäherung der Pole und ist am größten in der Nichtgebrauchslage des Griffbügels 1.

Die erfindungsgemäßen Maßnahmen können bestimmungsgemäß bei Haltegriffen darüber hinaus aber auch bei anderen drehbar gelagerten Bauteilen, die aus einer Ausgangsposition stufenlos und manuell unter einem begrenzten Drehwinkel bis zu einer Endposition herausgeschwenkt werden, zur Anwendung gelangen. Dabei ist insbesondere an Tankklappen, Handschuhkastendeckel, Deckel für Ablagefächer und dergleichen gedacht.

## Patentansprüche

1. Haltegriff für Fahrzeuge, bestehend aus einem U-förmig ausgebildeten Griffbügel (1), der einen Steg (2) und zwei Schenkel (3) umfaßt und an den freien Schenkelenden (4) daran mittels Lagerachsen (6) angelenkte Lagerböcke (5) trägt, die an einer Fahrzeugkarosserie, im Übergangsbereich zwischen dem Dach und einer Seitenwand befestigbar sind, wobei der Griffbügel (1) aus einer eng an einer Befestigungsfläche anliegenden Nichtgebrauchslage gegen die Kraft eines Rückstellmittels in eine von der Befestigungsfläche abstehenden Gebrauchslage schwenkbar ist, dadurch gekennzeichnet, daß das Rückstellmittel aus zumindest einem Magneten (7) besteht.

2. Haltegriff nach Anspruch 1, dadurch gekennzeichnet, daß der zumindest eine Magnet (7) aus einem stabförmigen Innenmagneten (8) und einem diesen umgreifenden Außenmagneten (9) besteht, wobei der Innenmagnet (8) eine der Lagerachsen (6) bildet oder mit einer der Lagerachsen (6) drehfest verbunden ist.

3. Haltegriff nach Anspruch 1 oder 2, dadurch gekennzeichnet, daß der Außenmagnet (9) einen ihn umhüllenden Mantel (12) aus magnetischem Eisen trägt.
